# EUROPEAN PATENT APPLICATION

(11) **EP 0 681 897 A1**
(43) Date of publication of application: **15.11.1995**
(21) Application number: 95104374.4
(22) Date of filing: 24.03.1995
(51) Int. Cl.: B29C 45/02, H01L 21/00

(54) **Resin sealing method and device**

(30) Priority: 25.03.1994 JP 79836/94
(71) Applicant: TEXAS INSTRUMENTS INCORPORATED, Dallas Texas 75265 (US)
(72) Inventor: Arikawa, Yoshitada c/o Texas Instr.Japan, Ltd., Hinode-cho, Hayami-gun, Oita-ken (JP); Fujiwara, Hiromitsu c/o Texas Instr.Japan,Ltd., Hinode-cho, Hayami-gun, Oita-ken (JP)
(74) Representative: Schwepfinger, Karl-Heinz, Dipl.-Ing.

(57) **Abstract**

To reduce the amount of resin used in resin sealing in order to reduce the costs of the resin sealing process.

Structure

An upper die (100) and lower die (102) are placed together to form a resin sealing package die (103), on the seam of which the following are situated: a number of cavities (104) each of which is capable of holding a single semiconductor chip (CP) attached to a lead frame (LF); a pot bottom (110) that serves to press a thermosetting molding compound (resin) (12) by means of the pressing force of a pressing member such as a flange (108); and runners (114) that serve to feed the resin from the aforementioned pot bottom (110) to the individual cavities (104). To the tip of the flange (108) is attached a flexible member that is capable of contracting in the pressing direction of the aforementioned flange (108) and simultaneously expanding in the direction perpendicular to the aforementioned pressing direction, while maintaining a nearly constant volume according to the pressure applied from the aforementioned flange (108). For example, this may be a cylindrical or disk-shaped flexible unit (10) which consists of silicone rubber.

## Description

### Detailed explanation of the invention

### Industrial application field

The present invention pertains to a resin sealing technology, and pertains in particular to a resin sealing method and device that are highly suitable for the resin sealing of semiconductor elements.

### Conventional technology

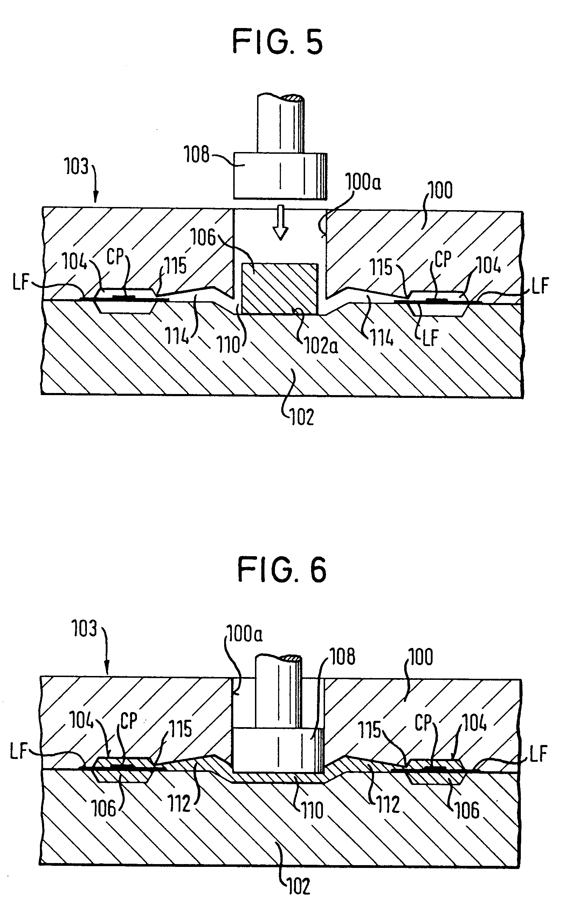

Figures 5 and 6 illustrate a conventional resin sealing device for ICs (integrated circuits) utilizing a lead frame. With this type of resin sealing device, an upper die (100) and lower die (102) are placed together to form a resin sealing package die (103), on the seam of which the following are situated: a number of cavities (104) each of which is capable of holding a single semiconductor chip (CP) attached to a lead frame (LF) ; a resin pressing unit (hereinafter referred to as a pot bottom) (110) that forms the bottom (including the sides of the through-hole (100a)) of a through-hole (hereinafter referred to as a pot) (100a) formed on the upper die (100) and formed through the seam surface on the lower die (102) so that a thermosetting molding compound (resin) (106) can be pressure-fed by means of a pressing member such as a flange (108); resin supply routes (hereinafter referred to as runners) (114) that serve to feed the resin from the aforementioned pot bottom (110) to the individual cavities (104); and gates (115) which are the ends of the individual runners (114), i.e., the entrances to the individual cavities (104).

The resin pressing unit (110) comprises the following: the pot (100a) formed on the upper die (100) to be approximately perpendicular to the die seam so as to provide a passageway for the flange (108); and the seam surface (hereinafter referred to as a pot) (102a) of the lower die (102) which is formed opposite the pot (100a), i.e., on the bottom of the pot (100a), and serves to receive the pressing force provided through the flange (108). A number of cavities (104), e.g., four, are situated randomly on the die seam around the aforementioned resin pressing unit (110). The runners (114) extend to the die seam so as to connect the outer periphery of the pot bottom (110) to the gates (115) of the individual cavities (104).

With the resin sealing device structured as described above, as shown in Figure 5, a lead frame (LF) is situated on the seam of the die (104) so that a single semiconductor chip (CP) is held in each cavity (103). The molded compound (106), having a shape, e.g., cylindrical, is set on the pot bottom (110). Next a driving means (not shown), such as a hydraulic means, provides a driving force to press the flange (108) at a pressure of, for example, 60 to 90 kg/cm², at a prescribed temperature (e.g., 160 to 190°C).

Next, as shown in Figure 6, the molding compound (106), which changes rapidly from a solid to a viscous gel liquid (100 to 300 cP) after approximately 2 to 5 sec under the pressure of the flange (108) and at a prescribed temperature (e.g., 70 kg/cm² at 180°C), is passed through the runners (114) and through the gates (115) and fed into the individual cavities (104). The cavities (104) are thus gradually filled. Next, 20 to 40 sec after the start of the process whereby the molding compound is pressure-fed by the flange (108), the gel liquid changes back to a solid and hardens. Next the individual semiconductor chips (CP) on the lead frame (LF) are resin-sealed by the moldings of the molding compound (106) hardened in the cavities (104).

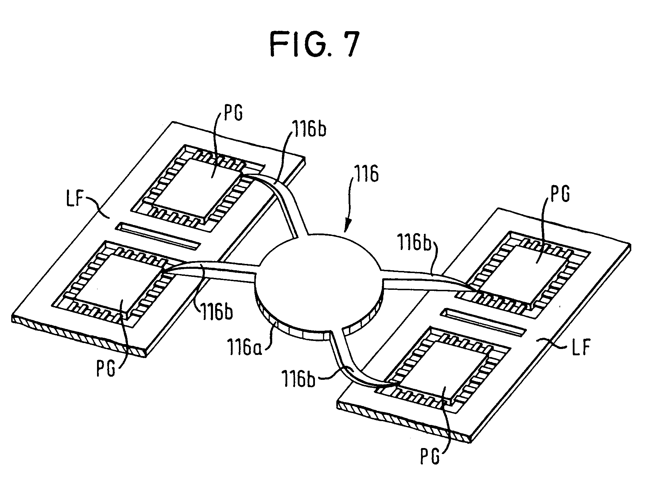

Thus the semiconductor chips (CP) and part of the lead frame (LF) are resin-sealed inside the die (103) to form a resin package (PG). The upper die (100) is separated from the lower die (102) and the lead frame (LF) and resin package (PG) are removed as shown in Figure 7. During this process, the resin mold (116) of the molding compound (106) hardened on the pot bottom (110) and runners (114) inside the die (103) are also removed as culls. The aforementioned cull (116) is separated from the resin package (PG) and treated as waste.

### Problems to be solved by the invention

With the conventional resin sealing device described above, the pressing force of the flange (108) on the pot bottom (110) inside the die (103) turns the molding compound (106) into a gel and simultaneously pressure-feeds it through the individual runners (114) and gates (115) to fill the individual cavities (104). The flange (108) is maintained in a pressurized condition throughout the molding compound hardening process. This is preferable from a reliability standpoint because if the molding compound turns to a gel and liquefies inside the die, the pressure from the flange (108) will be applied uniformly and a resin package (PG) of uniform density will be obtained after hardening. Thus when the molding compound (106) is filled to the prescribed level inside the die, the flange (108) must maintain pressure at a location that does not reach the pot bottom. In this manner part of the molding compound (106) forms a central cull (116a) on the cull (116) between the pressing surface (bottom) of the flange (108) and the seam surface (102a) of the lower die (102).

The entire volume of the cull, including the aforementioned central cull (116a) as well as the cull (116b) in the runner areas accounts for a considerable portion (e.g., 30-60%) of the overall amount of molding compound. This becomes waste as described above.

In recent years there has been a demand for higher quality in the fillers (inorganic fillers) and resins used in forming molding compounds for semiconductor products that have high levels of quality and reliability. This has naturally led to an increase in unit prices. Thus a need has developed to reduce the amount of cull significantly because 30-60% is wasted.

The present invention has been designed in light of the above problems and has the objective of providing an inexpensive resin sealing method and device that are highly efficient and significantly reduce the amount of sealing resin that is wasted as culls.

### Means for solving the problems

In order to solve the aforementioned problems, the resin sealing method of the present invention is a resin sealing method whereby the following are formed on the seam of a die: a cavity that is capable of holding a prescribed object to be resin-sealed, a resin pressing unit that serves to press the resin by means of a pressing member, and a resin supply route through which the aforementioned resin pressing unit is connected to the aforementioned cavity; the resin, pressed by the aforementioned resin pressing unit, is supplied to the aforementioned cavity through the aforementioned resin supply route; the aforementioned resin is hardened inside the aforementioned cavity so as to resin-seal the aforementioned object to be resin-sealed; wherein the following is situated between the tip of the aforementioned pressing member and the aforementioned resin that has been set on the aforementioned resin pressing unit: a flexible member that is capable of contracting in the pressing direction of the aforementioned pressing member and simultaneously expanding in the direction perpendicular to the aforementioned pressing direction, while maintaining a nearly constant volume according to the pressure applied from the aforementioned pressing member.

In addition, the resin sealing device of the present invention comprises the following: a die that comprises the following on its seam: a cavity that is capable of holding a prescribed object to be resin-sealed, a resin pressing unit that serves to press the resin by means of a pressing member, and a resin supply route through which the aforementioned resin pressing unit is connected to the aforementioned cavity; a pressing member that is designed to enable movement in a prescribed direction so as to press the aforementioned resin by means of the pressing member of the aforementioned die; and a flexible member that is attached to the tip of the aforementioned pressing member, and is capable of contracting in the pressing direction of the aforementioned pressing member and simultaneously expanding in the direction perpendicular to the aforementioned pressing direction, while maintaining a nearly constant volume according to the pressure applied from the aforementioned pressing member.

With the present invention the resin is fed by the resin pressing unit on the die through the resin supply route to the cavity by means of the pressing force of a pressing member, separated from it by a flexible member attached to the tip of the pressing member. During this process the flexible member is brought into contact with the bottom (pot bottom) of the resin pressing unit. It contracts in the direction in which the pressing member presses or moves and simultaneously expands in a direction approximately perpendicular to the direction of pressing or movement, while maintaining a nearly constant volume, according to the pressure applied from the pressing member. As a result the resin is pressed outward. In this manner the pressing force in the axial direction of the pressing member inside the resin pressing unit is converted into radial pressing force on the flexible member. Thus the resin is efficiently and smoothly pressure-fed through the resin supply route and into the cavity. The cavity and resin supply route are thus filled while only a small ring of resin is left on the periphery of the resin pressing unit formed on the bottom die, which has a diameter greater than the pot diameter. Next the resin hardens inside the die, thereby resin sealing the object to be resin-sealed by means of the resin mold formed inside the cavity. The resin remaining as a ring on the periphery of the resin pressing unit and the resin that fills the resin supply route form resin molds are treated as culls.

### Brief explanation of the figures

Reference will now be made, by way of example, to the accompanying drawings, in which:-

Figure 1 is a cross section of the major components of the resin sealing device of an application example of the present invention. The figure illustrates the molding compound inserted in the pot in the die, before it is pressure-fed.

Figure 2 is a cross section of the major components of the resin sealing device of an application example of the present invention. The figure illustrates the molding compound as it is pressed against and pressure-fed inside the die to fill the cavity.

Figure 3 is an oblique view that illustrates the shape of the cull obtained in an application example.

Figure 4 is a cross section that illustrates an example of a structure in which a flexible member is attached to the tip of a flange in an application example.

Figure 5 is a cross section of the major components of a conventional resin sealing device. The figure illustrates the molding compound inserted in the pot in the die, before it is pressure-fed.

Figure 6 is a cross section of the major components of a conventional resin sealing device. The figure illustrates the molding compound as it is pressed against and pressure-fed inside the die to fill the cavity.

Figure 7 is an oblique view that illustrates the shape of the cull obtained with the resin sealing technology of the conventional example.

### Application examples

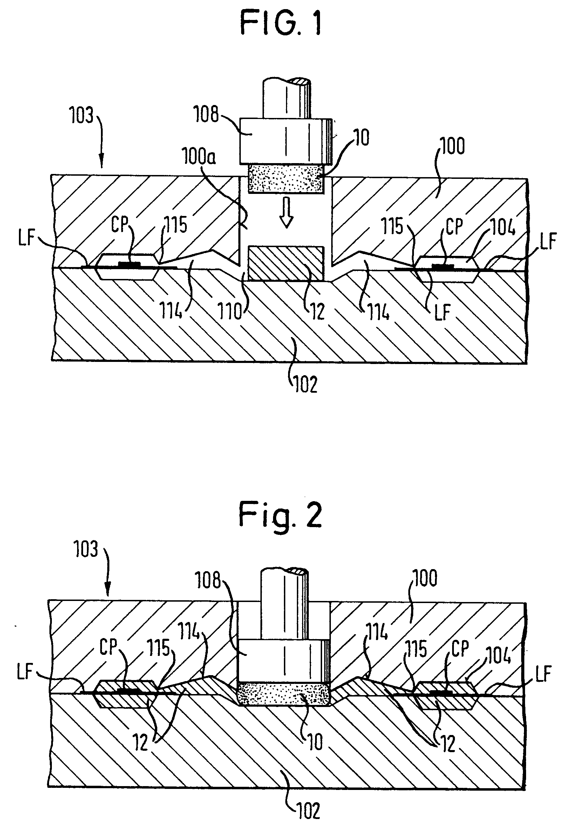

Application examples of the present invention will be explained below with reference to Figures 1 through 4.

Figures 1 and 2 illustrate the major elements of the structure of an IC resin sealing device that pertains to an application example of the present invention. Components in the figures which are the same as those in Figures 5 and 6 (conventional device) are denoted by the same numbers, and are not explained here in detail.

To the tip of the flange (108) of the resin sealing device of the present application example is attached a flexible member that is capable of contracting in the pressing direction of the aforementioned pressing member and simultaneously expanding in the direction perpendicular to the aforementioned pressing direction, while maintaining a nearly constant volume according to the pressure applied from the aforementioned pressing member. For example, this may be a cylindrical or disk-shaped flexible unit (10) that consists of silicone rubber.

The silicone rubber used in the flexible unit (10) in the present application example is heated and pressurized at all times during the sealing process inside the resin sealing device as described above. There should be roughly zero change in volume with respect to changes in pressure within at least the aforementioned pressure range (60 to 90 kg/cm²). In addition, if the temperature change during this process is no greater than 3%, the corresponding change in volume should be no greater than approximately 0.2% (because the volumetric expansion coefficient is 6 x 10⁻⁴/°C). Thus the flexible member contracts in the desired direction and simultaneously expands in the direction perpendicular to the aforementioned direction, while maintaining a nearly constant volume according to the pressure applied from the flange (108).

The diameter of the aforementioned flexible unit (10) under normal conditions, i.e., its diameter when it is not elastically deformed, is preferably the same as the diameter of the tip (pressing surface) of the flange (108). Alternatively, the flexible unit (10) may be formed as a cone with a taper of 5° or less, in which case its bottom diameter, i.e., the diameter of the surface in contact with the tip (pressing surface) of the flange (108), should be the same as the diameter of the flange tip. In addition, it is possible to form a cylinder with a diameter slightly (e.g., 1 to 2 mm) smaller than the diameter of the flange tip.

The molding compound (12) set on the pot bottom (110) consists of the same material as the conventional one (106). In terms of size, however, its volume is reduced according to the size of the flexible unit (10).

As shown in Figure 1, in order to perform resin sealing with the aforementioned resin sealing device, a lead frame (LF) is situated between the upper die (100) and lower die (102) so that each of the cavities (104) contains a single semiconductor chip (CP). The molding compound (12) is set on the pot bottom (110) and the flange (108) is driven downward by a driving means (not shown) such as a hydraulic driving means at a prescribed temperature (eg., 160-190°C).

Next the molding compound (12) on the pot bottom (110) is rapidly changed from a solid to a viscous gel liquid (100 to 300 cP) after approximately 2 to 5 sec under the pressure of the flange (108) and at a prescribed temperature (e.g., 70 kg/cm² at 180°C). This molding compound (12) is passed through the runners (114) and through the gates (115) and fed into the individual cavities (104). The cavities (104) are thus gradually filled.

During this process the flexible unit (10) first presses the molding compound (12), then makes contact with the pot bottom (102a). As shown in Figure 2, it contracts in the pressing direction (axial direction) and simultaneously expands in the direction perpendicular to that (radial direction) while maintaining a nearly constant volume, according to the pressure or pressing force from the flange (108). Thus the flexible unit (10) expands and deforms radially, causing the molding compound (12) to be pressed to the outside of the pot bottom (110), where it is pressure-fed through the runners (114) and gates (115) to the cavities (104).

Thus, with the resin sealing device of the present application example, the pressing force in the axial direction of the flange (108) inside the pot bottom (110) is converted into radial pressing force on the flexible unit (10). Thus, the molding compound (12) is pressure-fed through runners (114) and gates (115) into the cavities (104). The cavities (104) and runners (114) are filled completely and only a small ring is allowed to remain on the periphery of the pot bottom (110).

20 to 40 sec after the start of the process wherein the molding compound is pressure-fed by the flange (108), the molding compound changes back from a gel liquid to a solid and hardens. Next, the individual semiconductor chips (CP) on the lead frame (LF) are resin-sealed by the moldings of the molding compound hardened in the cavities (104).

With the present application example the amount of molding compound (12) set in the die (103) is less than in the conventional case, nearly in accordance with the volume of the flexible unit (10).

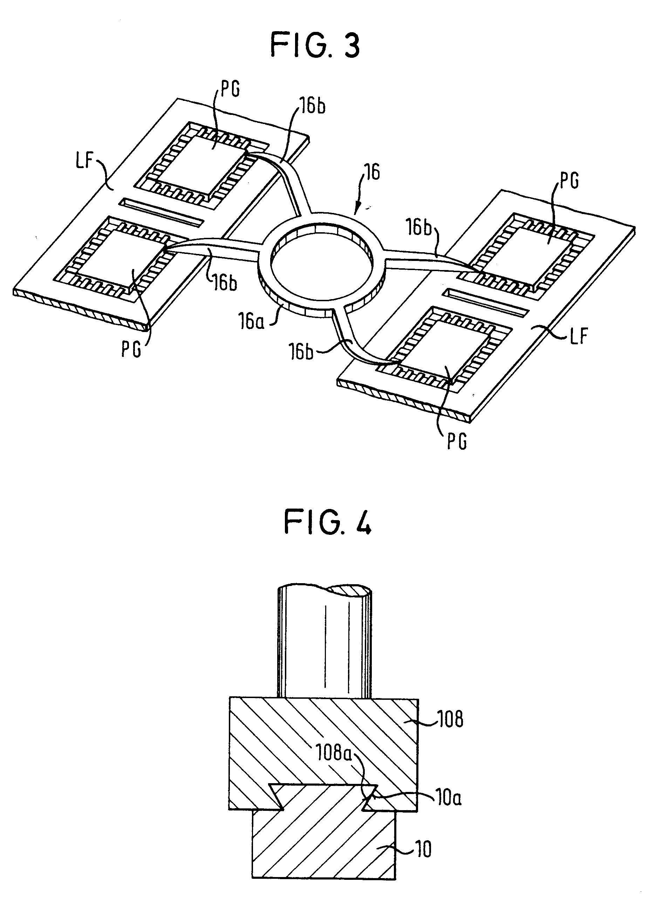

Thus, the semiconductor chips (CP) and part of the lead frame (LF) are resin-sealed inside the die (103) when the molding compound (12) hardens, forming a resin package (PG). Next, the upper die (100) is separated from the lower die (102) and the lead frame (LF) and resin package (PG) are removed as shown in Figure 3. During this process, the resin mold (16) of the molding compound, hardened on the pot bottom (110) and runners (114) inside the die (103), is also removed as a cull and is separated from the resin package (PG).

The aforementioned cull (16) comprises a central annular area (16a) which is the hardened molding compound (12) that remains on the periphery of the pot bottom (110) in the die (103). The legs (runner portion of the cull) (16b) which extend from the annular area (16a) in all directions are the hardened molding compound (12) which is inside the runners (114) in the die (103). The individual runner culls (16b) are the same as the runner culls (116a) in the conventional case. However, the central ring cull (16a) has less volume (capacity) than the central cull (106a) of the cull (116) in the conventional case according to the size of the flexible unit (10) that is elastically deformed during the resin sealing process. Through proper selection of the size and elastic characteristics (hardness) of the flexible unit (10) it is possible to minimize the amount of molding compound (12) that remains on the periphery of the pot bottom (110) in the die (103) during the resin sealing process, and it is possible to minimize the radial thickness of the annular area (16a) of the cull (16).

The aforementioned application example pertains to a single-flange system, whereby a single die is equipped with a single flange, and multiple (60 to 200) resin packages are obtained simultaneously by pressure-feeding a resin into multiple (60 to 200) cavities through multiple (e.g., 60 to 200) runners. It should be noted that the present invention may also be applied to multiflange systems, wherein a single die is equipped with multiple (e.g., 4) flanges, and multiple (4 x 4) resin packages are obtained simultaneously by pressure-feeding a resin into multiple (e.g., 4) cavities through multiple (e.g., 4) runners for each of the flanges.

The effectiveness of the present invention in reducing the amount of mold resin will be described below with reference to the two aforementioned systems.

In the first case, the present invention is applied to a single-flange system. The diameter of the tip of the flange (108) is 50 mm. The flexible member attached to the flange tip is silicone rubber with a diameter of 50 mm and thickness of 10 mm. The pot bottom (110) in the area formed on the lower die (102) has a diameter of 60 mm and depth of 5 mm. A suitable molding compound is selected. The central cull (16a) and runner culls (16b) which are treated as waste are 33% less than in the conventional case (116a and 116b). Thus, the overall reduction in molding compound is 20%. The conventional structure requires 216.9 g of molding compound per pot per cycle, whereas the present invention requires only 172.7 g of molding compound per pot per cycle. Thus it is possible to achieve a significant reduction in the amount of resin used.

In the next case the present invention is applied to a multiflange system. The diameter of the tips of the flanges (108) is 13 mm. The flexible members (10) attached to the flange tip consist of silicone rubber with a diameter of 13 mm and thickness of 2.5 mm. The pot bottom (110) in the area formed on the lower die (102) has a diameter of 16 mm and depth of 2.5 mm. A suitable molding compound is selected. The central cull (16a) and runner culls (16b) which are treated as waste are 28% less than in the conventional case (116a and 116b). Thus, the overall reduction in molding compound is 14%. The conventional structure requires 4.10 g of molding compound per pot per cycle, whereas the present invention requires only 3.52 g of molding compound per pot per cycle. Thus, it is possible to achieve a significant reduction in the amount of resin used.

Thus, with the resin sealing method of the present application example it is possible to significantly reduce the volume or capacity of the cull (16) generated from the resin mold (semiconductor chip (CP) resin mold) on the pot bottom (110) inside the die (103). Thus, it is possible to significantly reduce the amount of molding compound (12) used. In addition, it is possible to perform the resin sealing process efficiently and at low cost.

The flexible unit (10) may be attached to the bottom (pressing surface) of the flange (108) by adhesion with an adhesive. In cases where usage is frequent, the strength of the attachment can be increased as shown in Figure 4 by forming a tapered depression (108a) on the bottom of the flange (108) so as to widen inwards. A tapered protrusion (10a) on the flexible unit (10) is then fitted into the aforementioned depression (108a). It is also possible to separate the flange (108) and flexible unit (10), situating the flexible unit (10) on the molding compound (12) set on the pot bottom (110), and then the flange (108) downward.

With the aforementioned examples, a pot (100a) through which the flange (108) passes is formed on the upper die (100), and the flange (108) is pressed downward to press on the molding compound (12). It is also possible to form a pot on the lower die (102) and to invert the pot bottom so that the flange is lifted upward to press on the molding compound (12).

The material used to form the flexible unit (10) may be any material that can contract in the direction in which the pressing member presses or moves and simultaneously can expand in a direction nearly perpendicular to the direction of pressing or movement while maintaining a nearly constant volume, according to the pressure applied from the pressing member. Thus the present invention is not limited to the silicone rubber used in the aforementioned application examples. Fluororubber, etc. may also be used. In addition, the shape and size of the flexible unit (10) may be determined as desired. A taper or grooves may be applied. Other structures that are permissible include hollow structures filled with a different flexible member, as well as structures consisting of a number of flexible members laminated together.

The present invention is also not restricted to the aforementioned application examples in terms of pot bottom units, pot bottoms, and cavities in the die, nor with respect to runner shape, structure, number of runners, etc. These may be set as desired. In addition, the pressing member and driving means are not limited to flanges and hydraulic means; these likewise may be selected as desired.

The aforementioned application examples pertain to a technology whereby IC chips using a lead frame are resin-sealed. The present invention may also be applied to technologies for resin sealing semiconductor elements using other packaging systems. In addition, it may be applied to resin-sealed objects other than semiconductor elements.

### Effects of the invention

As described above with the resin sealing method and device of the present invention, a resin is pressure-fed by a resin pressing unit by means of a flexible member that is capable of contracting in the pressing direction of the aforementioned pressing member and simultaneously expanding in the direction perpendicular to the aforementioned pressing direction, while maintaining a nearly constant volume according to the pressure applied from the aforementioned pressing member. As a result, it is possible to significantly reduce the amount of resin left on the pot bottom, and hence the amount of cull that is discarded as waste. In addition, it is possible to perform the resin sealing process efficiently and at low cost.

### Reference numerals

10. Flexible unit (flexible member)
12, 106. Mold compound (resin)
16, 116. Culls
16a, 116a. Culls (central culls)
16b, 116b. Culls (runner culls)
100. Upper die
102a. Pot bottom (resin pressing unit)
102. Lower die
103. Die
104. Cavity
108. Flange
114. Runner (resin supply route)
115. Gate
CP. Semiconductor chip
LF. Lead frame
PG. Resin package

## Claims

1. A resin sealing method comprising forming on the seam of a die: a cavity that is capable of holding a prescribed object to be resin-sealed, a resin pressing unit that serves to press the resin by means of a pressing member, and a resin supply route through which the resin pressing unit is connected to the cavity; the resin, pressed by the resin pressing unit, is supplied to the cavity through the resin supply route; the resin is hardened inside the cavity so as to resin-seal the object to be resin-sealed;
wherein said resin sealing further comprises situating a flexible member that is capable of contracting in the pressing direction of the aforementioned pressing member and simultaneously expanding in the direction perpendicular to the aforementioned pressing direction, while maintaining a nearly constant volume according to the pressure applied from the aforementioned pressing member, between the tip of the aforementioned pressing member and the aforementioned resin that has been set on the aforementioned resin pressing unit.

2. A resin sealing device that comprises:
a die which comprises on its seam: a cavity which is capable of holding a prescribed object to be resin-sealed, a resin pressing unit that serves to press the resin by means of a pressing member, and a resin supply route through which the aforementioned resin pressing unit is connected to the aforementioned cavity;
a pressing member that is designed to enable movement in a prescribed direction so as to press the aforementioned resin by means of the pressing member of the aforementioned die; and
a flexible member that is attached to the tip of the aforementioned pressing member, and is capable of contracting in the pressing direction of the aforementioned pressing member and simultaneously expanding in the direction perpendicular to the aforementioned pressing direction, while maintaining a nearly constant volume according to the pressure applied from the aforementioned pressing member.
